Europäisches Patentamt

European Patent Office

Office européen des brevets

(19)

(11) EP 1 115 085 A1

(12) DEMANDE DE BREVET EUROPEEN

(43) Date de publication:
**11.07.2001 Bulletin 2001/28**

(51) Int Cl.⁷: **G06K 7/10**

(21) Numéro de dépôt: **00390022.2**

(22) Date de dépôt: **19.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **23.12.1999 FR 9916421**

(71) Demandeur: **INTERMEC SCANNER TECHNOLOGY CENTER S.A.**
**31670 Labege Cédex (FR)**

(72) Inventeurs:
- **Massieu, Jean-Louis**
  **82000 Montauban (FR)**
- **Puech, Jean-Michel**
  **31400 Toulouse (FR)**
- **Elakel, Khalid**
  **31320 Castanet (FR)**

(74) Mandataire:
**Cabinet BARRE LAFORGUE & associés**
**95, rue des Amidonniers**
**31000 Toulouse (FR)**

(54) **Lecteur de codes à barres muni d'un capteur bidimensionnel à balayage ajustable**

(57)     L'invention concerne un dispositif et un procédé d'acquisition de codes à barres bichromatiques, avec un capteur (3) bidimensionnel à balayage électronique. On modifie la hauteur Hy de la partie balayée (16) entre au moins deux balayages consécutifs. Le dispositif s'adapte ou peut être adapté ainsi au type et/ou aux caractéristiques inconnus à l'avance du code à lire.

Fig. 2

**Description**

L'invention concerne un dispositif optoélectronique d'acquisition de codes à barres bichromatiques, formés d'éléments de motifs géométriques (barres) monochromatiques ayant l'un de deux niveaux de couleurs contrastés, dont les formes et la disposition sont adaptées pour que chaque code puisse représenter de façon biunivoque une valeur d'informations à acquérir.

L'invention s'étend au procédé d'acquisition de codes mis en oeuvre avec un dispositif selon l'invention.

Dans les dispositifs optoélectroniques connus d'acquisition de codes à barres, le diaphragme présente une ouverture circulaire de faible diamètre de façon à éviter une défocalisation de l'image et/ou à augmenter la profondeur de champ du dispositif. Toutefois, du fait du faible diamètre de cette ouverture, l'intensité lumineuse réfléchie par le code à barres parvenant au capteur se trouve réduite, et dans la pratique, cet état de fait impose d'utiliser des sources lumineuses ayant une importante intensité lumineuse de façon à compenser la réduction d'intensité lumineuse. De telles sources sont néanmoins coûteuses et induisent une forte consommation d'électricité.

Une augmentation du diamètre de l'ouverture du diaphragme dans le but d'augmenter la quantité de lumière reçue par le capteur, conduit à une réduction de la profondeur de champ du dispositif, et donc à une réduction de l'efficacité de ce dernier.

Pour pallier ces inconvénients, une solution a consisté à réaliser un dispositif optoélectronique, tel que décrit dans la demande de brevet EP-61000, dont le diaphragme présente une ouverture présentant un allongement dissymétrique, selon un axe orthogonal par rapport à l'axe des codes à barres, telle qu'une ouverture de forme rectangulaire, rhomboïde ou elliptique. Cette solution permet effectivement d'augmenter la sensibilité des dispositifs optoélectroniques, proportionnelle au rapport flux recueilli sur flux réfléchi. Par là-même, la profondeur de champ de ces dispositifs est augmentée sans affecter de façon notable l'intensité recueillie sur le capteur, et l'efficacité de ces dispositifs se trouve accrue. Toutefois, du fait des dimensions relativement importantes de l'ouverture du diaphragme, une telle solution impose d'utiliser un diaphragme dissymétrique, et des moyens optiques de formation de l'image sur le capteur de tailles supérieures par rapport à celles des moyens optiques classiques, donc d'un coût et d'une complexité de réalisation plus importants que ceux des diaphragmes et moyens optiques classiques.

Une autre solution a consisté à réaliser des dispositifs optoélectroniques tels que décrits dans les demandes de brevet internationales WO-9620454 et WO-9847377 dont les moyens optiques sont adaptés pour obtenir, dans le plan (XOZ) parallèle au plan optique, un grandissement ml supérieur au grandissement m2 dans le plan (YOZ) perpendiculaire au plan optique.

Une telle solution, qui peut en outre être associée à celle décrite dans le brevet EP-61000, conduit à augmenter, selon des axes parallèles aux barres des codes à barres, la dimension de la surface éclairée desdits codes à barres dont l'image est réfléchie sur le capteur, et par là-même à augmenter la sensibilité du dispositif optoélectronique. Il est à noter, en outre, que cette augmentation de la sensibilité du dispositif résultant de la seule conception des moyens optiques et non des dimensions de l'ouverture du diaphragme, un tel dispositif peut être équipé d'un diaphragme classique à ouverture circulaire de faibles dimensions, et donc de moyens optiques de dimensions classiques, de faible coût et de réalisation aisée.

Toutefois, avec tous ces dispositifs connus dont le diaphragme et/ou les moyens optiques ne forment pas un système symétrique de révolution autour de l'axe optique, l'amélioration de la sensibilité n'est efficace que lorsque le plan optique (plan contenant l'axe optique et la direction de balayage) coïncide exactement avec la direction nominale de lecture du code à barres (perpendiculaire aux barres et espaces du code). Or, en pratique, le code à barres et/ou le dispositif optoélectronique ayant des orientations dans l'espace non fixées, cette condition n'est que rarement remplie. Un tel dispositif est extrêmement sensible au défaut d'alignement du plan optique avec la direction normale de lecture, et donc de maniement délicat.

De façon plus générale, les dispositifs connus optoélectroniques d'acquisition de codes à barres peuvent être configurés pour des caractéristiques prédéterminées des codes à acquérir et/ou pour un positionnement prédéterminé par rapport au dispositif, mais ont des performances dégradées dès que le code à barres ne présente pas ces caractéristiques attendues ou que le positionnement n'est pas parfait. Dès lors, leur emploi s'accompagne encore d'un taux d'échec de lecture important, notamment dans le cas de codes pluri-monodimensionnels tels que les codes PDF 417.

US-5 654 533 décrit un lecteur de codes bidimensionnels comprenant un capteur bidimensionnel et un diaphragme automatique dont le diamètre varie pour assurer un éclairement approprié du capteur. Ce dispositif ne vise pas et ne permet pas de résoudre le problème mentionné ci-dessus puisqu'avec ce dispositif un éclairement correct du capteur correspond à un diaphragme procurant une profondeur de champ insuffisante. En outre, ce dispositif est limité à l'acquisition de codes bidimensionnels par imagerie, c'est-à-dire par obtention et analyse d'images bidimensionnelles.

WO-98.16896 décrit un lecteur de codes bidimensionnels comprenant à la fois un dispositif à balayage électronique ayant un capteur bidimensionnel, et un dispositif scanneur à laser. Ce lecteur mixte permet à l'utilisateur de choisir l'un des deux dispositifs selon le code à lire. Il est néanmoins très complexe, et donc coûteux, fragile et d'utilisation délicate. L'invention vise au contraire à éviter l'emploi de dispositifs à laser incorporant des pièces mobiles.

Ainsi, il n'existe pas à ce jour de dispositif optoélectronique d'acquisition de codes à barres à balayage électronique, de performances suffisantes -notamment en profondeur de champ- pour permettre l'acquisition de codes de caractéristiques quelconques et pouvant être inconnues à l'avance (dimensions des barres, contraste des barres, type de codes, codes monodimensionnels ou pluri-monodimensionnels (c'est-à-dire formés d'une pluralité de codes à barres monodimensionnels) tels que les codes PDF 417, ou bidimensionnels...).

L'invention vise donc à proposer un dispositif et un procédé permettant l'acquisition de codes à barres de différentes caractéristiques -notamment de différents types- et qui puissent être adaptés au moment de l'acquisition - notamment automatiquement- aux caractéristiques -notamment au type- du code à acquérir.

L'invention vise en particulier à proposer un dispositif et un procédé optoélectroniques d'acquisition de codes à barres, à balayage électronique, qui permettent simultanément d'obtenir une grande profondeur de champ et une faible sensibilité en rotation aux défauts d'alignement du plan optique avec la direction nominale de lecture du code à barres, sans nécessiter l'emploi de sources lumineuses intenses.

L'invention vise aussi à proposer un tel dispositif qui ne nécessite pas une grande précision de positionnement relatif des codes à barres à acquérir par rapport au dispositif, et ce, aussi bien en distance relative qu'en alignement en rotation selon l'axe optique, et qui puisse être de type permettant l'acquisition manuelle, (c'est-à-dire par positionnement relatif manuel du dispositif et/ou du code à barres) des codes.

L'invention vise en particulier à proposer un dispositif et un procédé permettant l'acquisition manuelle (par positionnement relatif manuel du code et/ou du dispositif) de codes récents tels que les codes PDF 417.

L'invention vise aussi plus particulièrement à proposer un tel dispositif dont la fabrication est traditionnelle et peu coûteuse, notamment qui n'incorpore pas de pièces mobiles.

L'invention vise aussi plus particulièrement à proposer un procédé de mise en oeuvre simple et rapide, qui peut être entièrement automatique.

Pour ce faire, l'invention concerne un dispositif optoélectronique d'acquisition de codes à barres bichromatiques comprenant :

- une fenêtre de lecture,
- des moyens capteurs à balayage électronique comprenant un capteur bidimensionnel comportant une pluralité de détecteurs individuels, dits pixels, délivrant des signaux électriques représentatifs de la quantité de lumière qu'ils reçoivent, les moyens capteurs étant adaptés pour réaliser un balayage électronique d'au moins une partie, dite partie balayée, de ce capteur bidimensionnel selon une direction, dite direction XX' de balayage, les pixels du capteur bidimensionnel étant ordonnés en une pluralité de h rangs juxtaposés selon une direction, dite direction YY', perpendiculaire à la direction XX' de balayage, le capteur bidimensionnel (3) s'étendant selon la direction YY' sur une hauteur supérieure à un pixel, la partie balayée ayant une dimension selon la direction YY', dite hauteur Hy, constante lors de chaque balayage, d'un côté à l'autre du capteur bidimensionnel selon la direction XX' de balayage,
- des moyens optiques adaptés pour assurer la formation, au moins sur la partie balayée du capteur bidimensionnel, d'une image d'un code à acquérir situé en regard de la fenêtre de lecture,

caractérisé en ce que, en vue de l'acquisition d'un code placé en regard de la fenêtre de lecture, les moyens capteurs sont adaptés pour réaliser au moins deux balayages et pour modifier entre au moins deux balayages consécutifs, la hauteur Hy de la partie balayée du capteur bidimensionnel.

Dans tout le texte, le terme "rang" désigne chaque série de pixels individuels consécutifs que l'on peut parcourir pixel par pixel lors d'un balayage selon la direction de balayage. Un rang est donc défini par l'arrangement géométrique des pixels du capteur selon la direction XX' de balayage, et par le mode selon lequel on parcourt ces pixels considérés individuellement lors du balayage. Dans le cas le plus simple de pixels arrangés en lignes et d'un balayage effectué sur chaque ligne, un rang correspond à une ligne. Néanmoins, si l'on alterne les pixels de deux lignes adjacentes lors du balayage, un rang est alors formé des pixels de ces deux lignes.

L'invention s'étend aussi à un procédé mis en oeuvre dans et par un dispositif selon l'invention. L'invention concerne donc, mis en oeuvre dans un dispositif optoélectronique d'acquisition de codes à barres bichromatiques, comprenant :

- une fenêtre de lecture,
- des moyens capteurs à balayage électronique selon une direction globale de balayage, dite direction XX' de balayage, comprenant une pluralité de détecteurs d'éclairement individuels, dit pixels, délivrant des signaux électriques représentatifs de la quantité de lumière qu'ils reçoivent, ces moyens capteurs comprenant un capteur bidimensionnel dont les pixels sont ordonnés en une pluralité de h rangs, juxtaposés selon une direction, dite direction YY', perpendiculaire à la direction XX' de balayage, ce capteur bidimensionnel s'étendant perpendiculairement à la direction XX' de balayage sur une hauteur supérieure à un pixel, les moyens capteurs étant adaptés pour réaliser un balayage électronique d'au moins une partie, dite partie balayée, du capteur bidimensionnel, ayant une dimension selon la direction YY', dite hauteur Hy, constante lors de chaque balayage d'un côté à l'autre du capteur bidimensionnel selon la direction XX' de balayage,

- des moyens optiques adaptés pour assurer la formation, sur les moyens capteurs, d'une image d'un code à acquérir, située en regard de la fenêtre de lecture,

un procédé d'acquisition de codes à barres bichromatiques caractérisé en ce que, en vue de l'acquisition d'un code placé en regard de la fenêtre de lecture , on réalise au moins deux balayages et on modifie entre au moins deux balayages consécutifs, la hauteur Hy de la partie balayée du capteur bidimensionnel.

Dans un dispositif et un procédé selon l'invention, la hauteur Hy peut être modifiée une seule fois ; ou plusieurs fois mais non à chaque fois entre les balayages ; ou à chaque fois entre deux balayages consécutifs en vue de l'acquisition d'un même code.

Pour modifier la hauteur Hy de la partie balayée, on peut modifier soit la hauteur d'au moins un rang de la partie balayée (en sélectionnant un rang dont les pixels ont une hauteur pyj différente), soit le nombre de rangs de cette partie balayée, c'est-à-dire le nombre de pixels consécutifs selon la direction YY' dont les signaux sont sommés en un même signal utilisé lors du décodage. Ces deux variantes peuvent être combinées. On peut en effet modifier à la fois le nombre de rangs et la hauteur d'au moins un rang. En effet, la hauteur Hy de la partie balayée est égale à la somme des hauteurs pyj de chaque rang j de cette partie balayée. Si toutes les hauteurs pyj des rangs sont égales à une même valeur py, et si la partie balayée comprend hy rangs, la hauteur Hy de cette partie balayée est égale à hy x py. Si les rangs n'ont pas tous la même hauteur pyj,

$$Hy = \sum_{j=1}^{hy} pyj.$$

Ainsi, dans une variante, le dispositif selon l'invention est caractérisé en ce que chaque rang est formé de pixels ayant tous dans ce rang la même dimension selon la direction YY', dite hauteur pyj, en ce que la hauteur pyj de pixels d'au moins un rang du capteur bidimensionnel est différente de celle des pixels d'au moins un autre rang du capteur bidimensionnel, et en ce que pour modifier la hauteur Hy de la partie balayée, les moyens capteurs sont adaptés pour réaliser au moins un balayage, dit premier balayage, avec au moins un rang de pixels et au moins un autre balayage, dit deuxième balayage, avec au moins un rang ayant une hauteur pyj de pixels différente de celle d'au moins un rang du premier balayage. Avantageusement et selon l'invention, les moyens capteurs sont adaptés pour réaliser au moins un deuxième balayage avec au moins un rang ayant une hauteur pyj de pixels différente de celle de chaque rang d'au moins un premier balayage.

Dans une autre variante selon l'invention, pour modifier la hauteur Hy de la partie balayée, les moyens capteurs sont adaptés pour modifier le nombre, dit pas hy, de rangs consécutifs de la partie balayée.

La partie balayée du capteur est celle comprenant les pixels dont les signaux sont utilisés pour le décodage d'un code à partir d'un balayage. En modifiant la valeur de la hauteur Hy de la partie balayée entre au moins deux balayages, le dispositif s'adapte ou peut être adapté au type et/ou aux caractéristiques (qui peuvent être inconnus) du code à acquérir puisque parmi les différentes valeurs de la hauteur Hy utilisées, certaines au moins seront les mieux adaptées.

Dans une première variante de l'invention, les différentes valeurs possibles de la hauteur Hy peuvent être prédéterminées à l'avance (par exemple lorsque les variations de hauteur Hy sont obtenues par sélection de rang(s) parmi plusieurs hauteurs pyj différentes), et éventuellement mémorisées (par exemple différentes valeurs prédéterminées du nombre hy de rangs) dans le dispositif, qui comprend des moyens électroniques de traitement adaptés pour choisir ensuite le meilleur résultat obtenu par les différents balayages pour exécuter un protocole de décodage. Cette variante est notamment applicable dans le cas où le type de code est connu, mais non les caractéristiques optiques des codes à lire (contraste, dimensions...).

Dans une deuxième variante préférentielle de l'invention, le dispositif s'adapte automatiquement aux codes à lire, de type et caractéristiques pouvant être inconnus. Avantageusement, le dispositif selon l'invention, comprenant des moyens électroniques de traitement adaptés pour, lors de chaque lecture d'un code à acquérir :

.    commander les balayages du capteur selon la direction de balayage XX', et recevoir les signaux électriques qui sont issus des pixels,

.    exécuter un protocole de décodage prédéterminé en vue d'obtenir la valeur d'informations représentée par le code, est caractérisé en ce que les moyens capteurs sont adaptés pour, après chaque balayage, exécuter un traitement d'optimisation de la hauteur Hy pour améliorer les résultats de l'étape de balayage subséquente et réduire le nombre d'étapes de balayage nécessaires au décodage, en ce que lors de ce traitement d'optimisation une valeur optimisée de la hauteur Hy devant être utilisée lors d'un balayage subséquent est déterminée en fonction :

. d'au moins une valeur précédemment mesurée d'au moins un paramètre représentatif de la qualité de l'image acquise par les moyens capteurs,

. et/ou d'au moins une information issue d'une étape de décodage exécutée précédemment,

et en ce que les moyens capteurs sont adaptés pour enregistrer la valeur optimisée de la hauteur Hy ainsi déterminée à utiliser lors d'un balayage subséquent.

Dans un dispositif et un procédé selon cette deuxième variante de l'invention, la valeur de la hauteur Hy -notamment le pas hy et/ou la sélection du(des) rang(s) de hauteur pyj utilisée- est donc optimisée après chaque balayage pour améliorer les résultats de l'étape de balayage subséquente, ce qui permet d'exécuter et d'accélérer le processus de décodage et de réduire le nombre d'étapes de balayage nécessaires au décodage, et ce avec une profondeur de champ, une consommation électrique et une sensibilité en rotation autour de l'axe optique compatibles avec une utilisation pratique du dispositif, et avec un dispositif à balayage électronique exempt de pièces mobiles.

En particulier, dans le cas de codes à barres simples ou du type PDF 417, les moyens électroniques de traitement déterminent après chaque balayage la valeur optimisée de la hauteur Hy pour obtenir la meilleure profondeur de champ avec une sensibilité en rotation donnée.

Avantageusement et selon l'invention, la détermination de la valeur optimisée de la hauteur Hy est effectuée par calcul, par un asservissement en boucle fermée à partir d'une valeur de consigne d'un paramètre, ou par un asservissement d'optimisation, par comparaisons de l'évolution d'au moins un paramètre d'une lecture à l'autre. Un automatisme d'asservissement est donc avantageusement incorporé dans les moyens électroniques de traitement.

Avantageusement et selon l'invention, la valeur optimisée de la hauteur Hy est déterminée en fonction d'au moins une valeur précédemment mesurée -notamment à l'issue de la dernière étape de balayage effectuée précédemment- d'au moins un paramètre représentatif de la qualité de l'image acquise par les moyens capteurs, choisi parmi la fréquence spatiale maximale fx de l'image du code selon la direction XX' de balayage, l'intensité maximale d'au moins une catégorie d'éléments de l'image du code, l'intensité minimale d'au moins une catégorie d'éléments de l'image du code, le contraste d'au moins une catégorie d'éléments de l'image du code. D'autres paramètres semblables peuvent être utilisés en variante ou en combinaison.

Avantageusement et selon l'invention, la valeur optimisée de la hauteur Hy est déterminée en fonction d'au moins une information relative au type de code à acquérir issue d'une étape de décodage exécutée précédemment.

Avantageusement et selon l'invention, chaque valeur précédemment mesurée et/ou chaque information utilisée pour déterminer la(les)dite(s) valeur(s) optimisée(s) a été obtenue et enregistrée lors d'un balayage précédant immédiatement ledit traitement d'optimisation.

Avantageusement et selon l'invention, les moyens électroniques de traitement sont adaptés pour fixer par défaut et enregistrer, avant un premier balayage en vue de l'acquisition d'un code et/ou après un dernier balayage en vue de l'acquisition d'un code, une valeur initiale Hy° de la hauteur Hy -notamment une valeur hy° du pas hy-. Par exemple, on peut choisir hy° = h/2, où h est le nombre total de rangs correspondant à la hauteur totale H du capteur selon la direction YY'.

Avantageusement et selon l'invention, les moyens électroniques de traitement sont adaptés pour, après chaque balayage :

- déterminer la valeur mesurée de la fréquence spatiale maximale fx de l'image du code selon la direction XX' de balayage,

- calculer et enregistrer la valeur optimisée de la hauteur Hy à partir d'une fonction affine de l'inverse de la valeur mesurée de la fréquence spatiale maximale fx de l'image du code selon la direction XX' de balayage.

En outre, avantageusement et selon l'invention, les moyens électroniques de traitement sont adaptés pour déterminer la valeur optimisée de la hauteur Hy selon des fonctions paramétrées par des valeurs prédéfinies -notamment par l'utilisateur ou à la fabrication, mémorisées dans une mémoire morte du dispositif- de coefficients paramétriques liés au(x) type(s) de codes à acquérir.

Avantageusement et selon l'invention, les moyens électroniques de traitement sont adaptés pour déterminer, après au moins un balayage -notamment après un premier balayage en vue de l'acquisition d'un code ou après chaque balayage-, le type de code correspondant et la valeur des coefficients paramétriques correspondants. Par exemple, si l'on détecte un nombre de niveaux de gris supérieur à 2 avec une fréquence spatiale homogène caractéristique, il est probable que le code est du type PDF 417 et comprend donc plusieurs lignes de barres, et que Hy était supérieure à la hauteur de l'image d'une ligne de barres du code. On peut alors imposer des critères ultérieurs sur la hauteur Hy -notamment sur le pas hy-, notamment que Hy est inférieure à 4 fois la largeur de l'image de l'élément le plus fin du code, ce qui est une condition nécessaire pour l'acquisition de codes PDF 417.

Avantageusement et selon l'invention, les moyens électroniques de traitement sont adaptés pour calculer la valeur optimisée de la hauteur Hy selon une fonction paramétrée par une valeur prédéfinie de la déviation angulaire maximale θmax admissible des moyens capteurs autour de l'axe optique ZZ' par rapport au code à acquérir.

Dans une variante avantageuse de l'invention, les moyens électroniques de traitement sont adaptés pour déterminer et, le cas échéant, modifier, la valeur optimisée de la hauteur Hy de façon à optimiser la valeur mesurée du contraste d'au moins une catégorie d'éléments de l'image du code. Pour ce faire, les moyens électroniques de traitement peuvent inclure un asservissement en boucle fermée apte à optimiser le contraste.

Dans une autre variante de l'invention, la valeur optimisée de la hauteur Hy est déterminée par calcul.

Avantageusement et selon l'invention, le capteur bidimensionnel est un capteur surfacique formé d'une matrice CCD ou APS de pixels. Ce capteur peut prendre plusieurs formes de réalisation.

Dans une première forme de réalisation, les pixels d'un même rang se jouxtent les uns les autres et sont alignés selon la direction XX' de balayage, le capteur étant formé d'une matrice de pixels à h lignes. Autrement dit, chaque rang de pixels est formé de l'une des lignes du capteur. Les pixels sont en général carrés ou rectangulaires.

Dans d'autres formes de réalisation, les moyens électroniques de traitement et le capteur sont adaptés pour que les pixels d'un même rang appartiennent à deux lignes distinctes de pixels du capteur adjacentes l'une à l'autre selon la direction YY', parallèles à la direction XX' de balayage, les pixels consécutifs de chaque rang lorsqu'on parcourt un rang selon la direction de balayage pixel par pixel, appartenant alternativement à l'une ou l'autre de ces deux lignes. Cette variante permet de réduire, avec la même résolution, la dimension du capteur selon la direction XX' de balayage. Les pixels peuvent être carrés ou rectangulaires, ou présenter d'autres formes, en général polygonales.

En outre, la hauteur pyj des pixels de chaque rang peut être la même (py) pour tous les rangs ou au contraire différente d'un rang à l'autre.

Par ailleurs, avantageusement et selon l'invention, les moyens optiques comportent un diaphragme dont les dimensions sont de l'ordre des dimensions minimales correspondant à la limite théorique de diffraction en étant toujours supérieures à ces dimensions minimales. Grâce à l'invention, on peut en effet adopter un diaphragme aussi petit que la limite théorique de diffraction le permet. Ainsi, avantageusement et selon l'invention, la dimension li du diaphragme selon la direction II' choisie parmi la direction XX' de balayage ou la direction YY', est de l'ordre de mais supérieure à :

$$k.\lambda.f(1+mi)/pi.Nmini$$

où

$\lambda$ est la longueur d'onde des moyens d'éclairage,

f est la distance focale des moyens optiques,

mi est le grandissement des moyens optiques selon la direction II',

pi est la dimension des pixels des moyens capteurs selon la direction II',

Nmini est le nombre minimum de pixels consécutifs selon la direction II' devant être contenus dans l'image d'un élément du code sur le capteur pour permettre son décodage,

k est un coefficient de forme du diaphragme.

Avantageusement et selon l'invention, on exécute un traitement d'optimisation caractérisé par l'une au moins des caractéristiques décrites ci-dessus en relation avec le dispositif selon l'invention. L'invention concerne donc aussi un procédé conforme à l'une des revendications 18 à 32.

Il est à noter que US-5 319 182 décrit un capteur mixte mélangeant des éléments photoémetteurs et des éléments photosensibles pouvant être utilisés dans un lecteur de codes à barres à matrice de diodes émettrices et réceptrices, et vise à assurer un éclaircissement axial de la cible aligné avec le champ de vision sur la cible, pour éviter les effets de diffusion et de couches. Ce document mentionne de configurer et optimiser le groupement et le taux d'émetteurs et de détecteurs de la matrice selon l'application d'imagerie qui en est faite, en particulier pour la lecture de codes à barres. Néanmoins, ce document ne décrit pas un dispositif à balayage électronique capable de s'adapter aux caractéristiques inconnues d'un code à lire et dans lequel le nombre de pixels dans la direction perpendiculaire à la direction de balayage est modifié entre deux balayages consécutifs.

L'invention concerne aussi un dispositif et un procédé caractérisés en combinaison par tout ou partie des caractéristiques mentionnées ci-dessus ou ci-après.

D'autres buts, caractéristiques et avantages de l'invention, apparaîtront à la lecture de la description suivante qui se réfère aux figures annexées décrivant différents exemples non limitatifs de réalisation de l'invention et dans lesquelles :

- la figure 1 est un schéma de principe général illustrant la géométrie d'un dispositif selon l'invention,
- la figure 2 est un schéma illustrant les moyens électroniques de traitement d'un dispositif selon l'invention,
- la figure 3 est un schéma de principe dans le plan image permettant de déterminer une formule de calcul de la valeur optimisée du pas hy dans le cas de codes à barres,
- la figure 4 est un organigramme d'une première variante d'un procédé selon l'invention,
- la figure 5 est un organigramme d'une deuxième variante d'un procédé selon l'invention,
- les figures 6 et 7 sont des schémas illustrant deux variantes de réalisation d'un capteur d'un dispositif selon l'invention,
- la figure 8 est un diagramme montrant un exemple de signal d'intensité obtenu après une lecture d'un code,
- la figure 9 est un diagramme montrant un exemple de signal d'intensité après une lecture du code subséquente à celle de la figure 8,
- la figure 10 est un diagramme montrant un autre exemple de signal d'intensité obtenu après une lecture d'un code,
- la figure 11 est un exemple de spectre d'un signal d'intensité obtenu dans le cas d'un code à barres à deux largeurs de barres,
- la figure 12 est un schéma illustrant une autre variante de réalisation d'un capteur d'un dispositif selon l'invention.

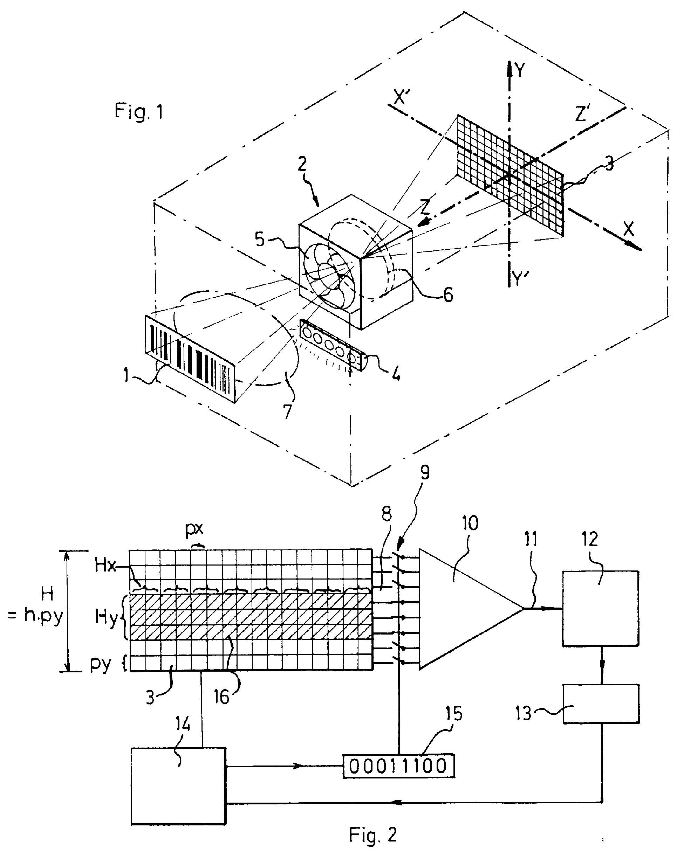

La figure 1 représente un schéma de principe d'un dispositif optoélectronique selon l'invention. Les caractéristiques générales d'un tel dispositif optoélectronique et sa réalisation sont bien connues. Seules les caractéristiques propres à l'invention sont donc détaillées.

Ce dispositif optoélectronique comprend généralement un châssis définissant une fenêtre de lecture 7 devant laquelle sont présentés des codes 1 à acquérir. L'invention s'applique à tout code bichromatique tel que des codes barres formés d'éléments de motifs géométriques monochromatiques ayant l'un de deux niveaux de couleur contrastés, dont les formes et la disposition sont adaptées pour que chaque code puisse représenter de façon biunivoque une valeur d'information à acquérir. Dans l'exemple de la figure 1, on a représenté un code à barres monodimensionnel traditionnel. Le châssis du dispositif renferme des moyens 2 optiques, un capteur 3, des moyens 4 d'éclairage, par exemple sous forme d'une barrette de LED et de son optique associée, permettant d'éclairer un code 1 à acquérir placé en regard de la fenêtre de lecture 7. Le dispositif optoélectronique peut être du type portatif destiné à être déplacé par un utilisateur devant un code 1 à acquérir, ou au contraire, de type fixe, le code 1 étant lui-même déplacé, manuellement ou non, devant la fenêtre de lecture du dispositif.

Les moyens 2 optiques comprennent un diaphragme 5, et un jeu de lentilles 6 formant un système optique présentant un axe optique ZZ' apte à assurer la formation, sur le capteur 3, d'une image du code 1 à acquérir.

Le capteur 3 est formé d'un capteur bidimensionnel au moins sensiblement centré sur l'axe optique ZZ' des moyens 2 optiques, et comprenant une pluralité de détecteurs d'éclairement individuel, dits pixels, délivrant des signaux électriques représentatifs de la quantité de lumière qu'ils reçoivent. Le capteur 3 est du type à balayage électronique, c'est-à-dire que ses pixels sont lus successivement, individuellement ou par groupe, les uns après les autres selon une direction globale de balayage, dite direction XX' de balayage, perpendiculaire à l'axe optique ZZ'. Le capteur 3 est formé d'une matrice de pixels ordonnés en une pluralité de h rang, h étant un nombre entier supérieur à 1, juxtaposés selon la direction YY' perpendiculaire à la direction XX' de balayage et à l'axe optique ZZ'. La direction XX' de balayage correspond à une direction d'alignement, ou, à tout le moins, à la direction globale d'arrangement (direction médiane dans le cas de pixels parcourus en zig-zag), des pixels du capteur 3. Un tel capteur 3 est bien connu en lui-même. Chaque ligne de pixels est reliée à une sortie, et les pixels sont lus successivement par décalage selon la fréquence d'un signal d'horloge qui pilote le capteur 3.

Dans la variante représentée figures 1 et 2, le capteur 3 est une simple matrice de pixels ordonnés en lignes droites et en colonnes droites. Les pixels d'un même rang se jouxtent alors les uns les autres et sont alignés selon la direction XX' de balayage qui correspond à la direction des lignes du capteur 3, qui est ainsi formé d'une matrice de pixels à h lignes de pixels ayant tous la même dimension selon la direction YY', dite hauteur py.

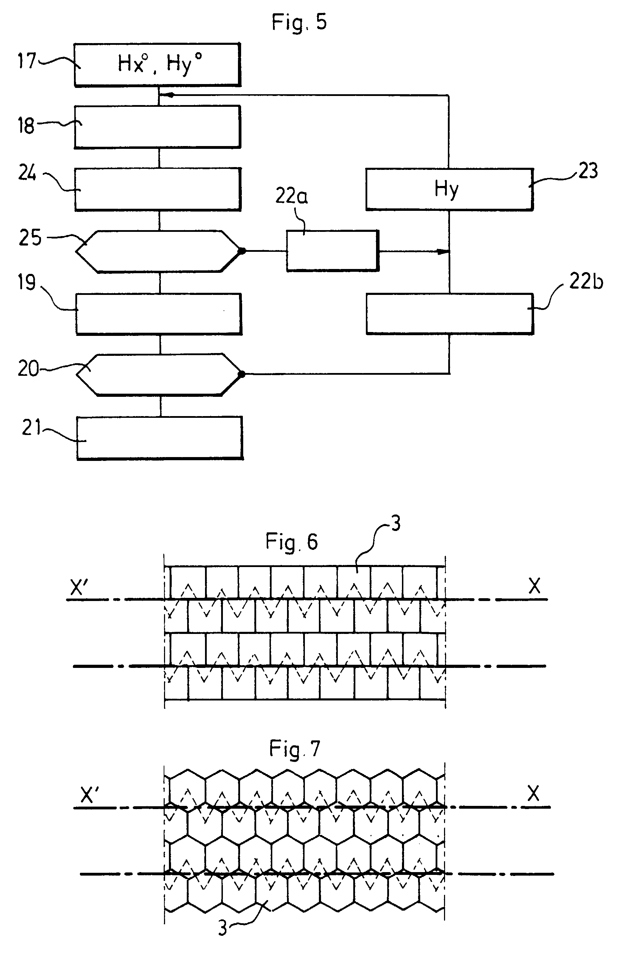

La figure 6 représente une variante de réalisation dans laquelle les pixels des lignes adjacentes selon la direction YY' sont décalés longitudinalement, chaque rang du capteur 3 étant formé de deux lignes adjacentes dont les pixels peuvent être parcourus alternativement d'une ligne à l'autre, en zigzag. L'intérêt d'un tel balayage est de réduire la dimension du capteur 3 selon la direction XX' de balayage pour une même résolution. L'inconvénient est néanmoins d'augmenter la dimension totale du capteur 3, pour une même résolution, selon la direction YY'.

La variante de la figure 7 est semblable à celle de la figure 6, à l'exception du fait que les pixels ne sont pas carrés, mais hexagonaux. D'autres variantes de réalisation semblables sont bien sûr possibles.

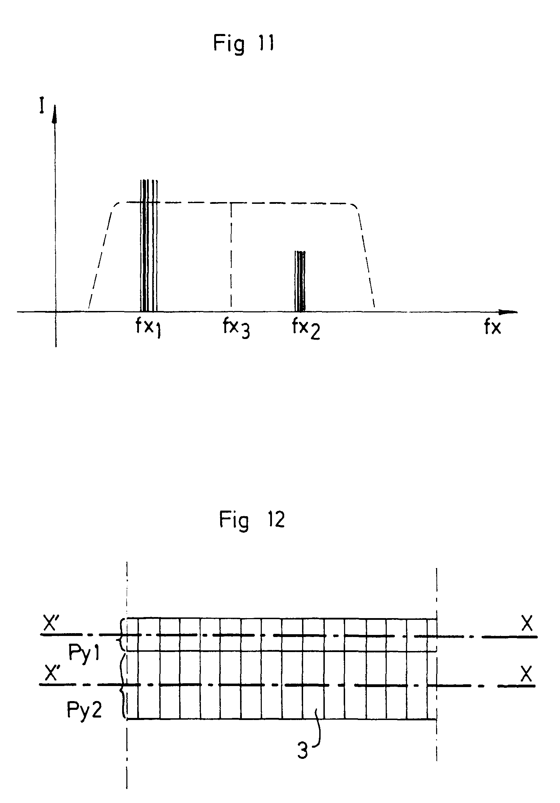

Dans la variante de la figure 12, le capteur 3 comprend au moins deux lignes adjacentes de pixels de hauteurs de pixels pyj différentes, à savoir une ligne de pixels de faible hauteur pyl et une ligne de pixels de grande hauteur py2. Dans la forme de réalisation la plus simple, le capteur 3 ne comprend que deux lignes. Rien n'empêche néanmoins de multiplier les lignes de hauteurs différentes. Il est à noter à cet égard que la hauteur de l'image du code sur le capteur 3 est très supérieure à celle des lignes du capteur 3 et à la hauteur totale H du capteur 3.

La figure 2 représente les moyens électroniques de traitement d'un dispositif selon l'invention. Tous les pixels de chaque rang du capteur 3 sont reliés en série sur l'une des broches de sortie 8 du capteur 3 qui comprend donc h broches de sortie 8. Les broches de sortie 8 sont reliées par l'intermédiaire d'un ensemble de commutateurs 9 à l'entrée d'un circuit sommateur 10 qui délivre un signal sur une sortie 11 à un circuit d'acquisition 12 apte à enregistrer les différentes valeurs obtenues sur la sortie 11 au cours du temps, c'est-à-dire au cours du balayage. Ce circuit 12 d'acquisition délivre donc un signal d'intensité qui est fourni à un circuit 13 logique de décodage. Ce circuit 13 logique de décodage fournit un signal de déclenchement à un circuit logique de commande 14 à microprocesseur(s) qui permet de commander le fonctionnement du capteur 3. En particulier, le circuit logique 14 commande un registre 15 associé aux commutateurs 9, de telle sorte que les valeurs de ce registre 15 permettent l'ouverture ou la fermeture de chacun des commutateurs 9 placé entre chaque broche de sortie 8 du capteur 3 et chaque entrée correspondante du sommateur 10.

Comme cela est schématisé figure 2, on voit que lorsqu'un bit du registre 15 est à zéro, le commutateur 9 correspondant est ouvert, tandis que lorsque ce bit est à 1, le commutateur 9 correspondant est fermé. Dans l'exemple représenté figure 2, le capteur 3 comprend huit rangs, et seuls le troisième rang, le quatrième rang et le cinquième rang (numérotés à partir du bas) sont reliés au circuit sommateur 10. A chaque instant, les signaux issus de ces trois rangs sont donc sommés sur la sortie 11. A chaque balayage, les hy rangs du capteur 3 qui sont actifs c'est-à-dire sélectionnés pour former une partie, dite partie balayée 16 du capteur 3, sont balayés simultanément en parallèle grâce au circuit d'alimentation 7.

Les moyens 3, 12, 13, 14 capteurs sont ainsi adaptés pour, lors de chaque balayage, grouper les pixels en groupes de pixels adjacents, dits éléments de lecture individuels, ayant tous un même nombre, supérieur ou égal à 1, de pixels dont les signaux sont sommés en un même signal utilisé pour le décodage du code, les différents éléments de lecture individuels s'étendant successivement selon la direction XX' de balayage en définissant une sélection de rang(s) formant la partie 16 balayée par le balayage et présentant une dimension selon la direction YY', dite hauteur Hy, qui reste la même pour tous les éléments de lecture individuels formant la partie balayée par un même balayage. Chaque élément individuel comprend dans chaque rang de la partie balayée 16, un même nombre hx de pixels adjacents selon la direction XX' de balayage et comprend un nombre hy de rangs, c'est-à-dire de pixels, adjacents selon la direction YY'.

Dans une première forme de réalisation, les moyens 3, 12, 13, 14 capteurs sont adaptés pour, lors de chaque balayage, activer à chaque instant un élément de lecture individuel, et pour parcourir le capteur bidimensionnel 3 en éléments de lecture individuels successifs ayant tous un même nombre de pixels définissant la sélection de rang(s) du capteur bidimensionnel 3 formant ladite partie balayée 16, les éléments de lecture individuels présentant une dimension, dite hauteur Hy, selon la direction YY' qui reste constante au cours d'un même balayage. En variante, le groupement des pixels peut être effectué non pas par voie électronique, mais par la logique à partir des signaux reçus de chaque pixel individuellement.

Lors d'un balayage, chacun des pixels de chacun des rangs est lu selon la fréquence délivrée par le circuit logique de commande 14. Le circuit 13 logique de décodage est aussi adapté et programmé pour combiner et sommer les pixels consécutifs selon la direction XX' de balayage selon un pas hx, qui, dans l'exemple représenté, est égal à 2. Ainsi, les pixels du capteur 3 sont groupés en éléments de lecture individuels lus successivement s'étendant selon la direction YY' selon un pas hy, soit une hauteur $Hy = hy \times py$, et selon la direction XX' de balayage selon un pas hx, soit une largeur $Hx = hx \times px$, px étant la largeur de chaque pixel (dimension selon la direction XX' de balayage).

Dans la variante représentée, la réunion des hy rangs selon la direction YY' est obtenue par sommation des signaux analogiques, alors que la réunion des hx pixels est obtenue de façon logique par programmation du circuit 13 logique de décodage. D'autres variantes de réalisation sont possibles. Par exemple, les hx pixels peuvent être groupés par lecture selon une fréquence appropriée avec sommation des signaux analogiques des pixels lus successivement. Il est aussi possible de balayer toutes les lignes mais de sélectionner et de grouper les hy rangs par voie logique par programmation du circuit 13 logique de programmation.

Dans le cas des capteurs 3 tels que représentés figures 6 et 7, le circuit 14 logique de commande peut commander à chaque top d'horloge un changement de la valeur du registre 15 pour lire alternativement les lignes adjacentes d'un rang.

Dans tous les cas, en variante, on peut aussi lire tous les pixels individuellement et successivement, de toutes les lignes, et programmer le circuit 13 logique de programmation de façon à grouper les hx x hy pixels et à sommer leurs signaux pour obtenir les éléments de lecture individuels, correspondant à la partie balayée 16.

Sur la figure 2, on a représenté par des hachures la surface utile active correspondant à la partie balayée 16 du capteur 3 qui permet de recueillir l'intensité lumineuse issue des moyens optiques 2 et qui est utilisée pour la lecture du code, c'est-à-dire au cours du décodage subséquent. Il est à noter que, là encore, la partie balayée 16 peut être définie électroniquement, les moyens capteurs recevant les signaux provenant uniquement de cette partie balayée, ou, en variante, par voie logique, le capteur 3 étant intégralement lu mais seuls les signaux issus des pixels de la partie balayée 16 étant ensuite exploités. A chaque instant, la partie balayée 16 du capteur 3 correspond à un rectangle ayant hy rangs en hauteur, et hx pixels en largeur, correspondant à un élément de lecture individuel. Tous les signaux électriques issus des pixels de cet élément de lecture individuel sont sommés sur la sortie 11. De la sorte, plus le nombre de pixels de cet élément de lecture individuel hx et hy est grand, plus le signal obtenu sera important, pour une même intensité lumineuse reçue sur le capteur 3.

Selon l'invention, les moyens 14 logiques de commande à microprocesseur(s) incorporent un programme de traitement logique permettant d'optimiser la valeur de la hauteur Hy de la partie balayée 16 -notamment la valeur du pas hy de cette partie balayée 16-.

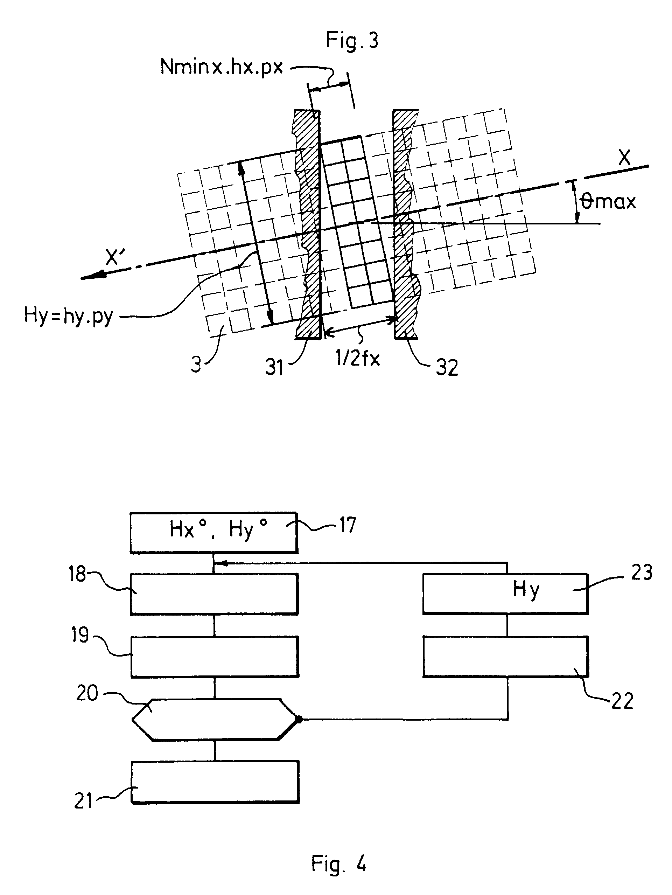

La figure 4 représente une première variante d'un procédé selon l'invention mis en oeuvre dans un dispositif selon l'invention pour permettre de déterminer automatiquement la valeur optimisée de la hauteur Hy -notamment du pas hy- en vue d'optimiser la profondeur de champ du dispositif selon l'invention. Lors de l'étape 17, les valeurs de la hauteur Hy et de la largeur Hx des éléments de lecture individuels -notamment les valeurs des pas hx et hy- sont initialisées à des valeurs initiales Hy° et Hx° -notamment hy° et hx°- prédéterminées. Ces valeurs initiales ont en pratique peu d'importance dans la mesure où le procédé selon l'invention est convergent très rapidement. Par exemple, hy° et hx° peuvent être fixées à 1. En variante, on peut choisir hy° = h/2 (ou ENT (h/2) si h est impair) et hx° = 1, dans le cas où l'on souhaite acquérir a priori des codes à barres monodimensionnels. Dans le cas de codes à barres de type PDF 417, on peut choisir hy° =1 et hx° = 1. Quel que soit le type de code à acquérir, le procédé selon l'invention permettra d'obtenir un décodage, plus ou moins rapidement selon la valeur initiale hy° implémentée. Dans la variante de la figure 12, on choisit l'un des rangs au moins, c'est-à-dire l'une au moins des hauteurs pyj.

Il est à noter cependant que compte tenu des vitesses de cadencement actuelles des microprocesseurs pouvant être utilisés dans les moyens 14 logiques de commande, la vitesse de balayage et de décodage est extrêmement rapide et, en tout état de cause, très supérieure au déplacement relatif du code 1 et du capteur 3 pouvant être induit par les mouvements d'un opérateur humain.

L'étape 18 subséquente correspond à un balayage en vue de la lecture d'un code 1, c'est-à-dire à la réalisation d'un balayage complet du capteur 3, avec la valeur précédemment enregistrée et sélectionnée de la hauteur Hy -notamment du pas hy et/ou de la hauteur pyj du(des) rang(s)- de la partie balayée 16, les moyens 4 d'éclairage étant actifs. L'étape 19 subséquente correspond à l'exécution du protocole de décodage. Ce protocole de décodage est bien connu en lui-même et consiste, d'une part, à déterminer le type de code 1 à acquérir, puis, selon le type de code à déterminer, les valeurs d'informations représentées par le code. Lors de l'étape 20 subséquente, on détermine si le processus de décodage 19 a abouti ou non au décodage complet du code 1 à acquérir. Si tel est le cas, le procédé est terminé lors de l'étape finale 21, puis replacé au démarrage de l'étape 17 d'initialisation en vue de l'acquisition d'un nouveau code 1.

Dans le cas où l'étape 20 détermine que le décodage n'a pas abouti, on exécute, dans une étape 22, un traitement logique permettant de déterminer si la hauteur Hy -notamment le pas hy et/ou la sélection du(des) rang(s)- de la partie balayée 16 doit ou non être modifiée, puis on détermine et on enregistre une nouvelle valeur optimisée de cette hauteur Hy lors d'une étape 23 de modification subséquente, à l'issue de laquelle on revient au début de l'étape 18 pour effectuer un nouveau balayage et une nouvelle lecture du code 1 à acquérir. Dans cette variante, on exécute donc le processus de décodage 19 après chaque étape de balayage 18. Lors de l'étape 22 de traitement logique, on peut donc prendre en compte soit au moins une valeur mesurée d'au moins un paramètre représentatif de la qualité de l'image acquise par le capteur 3 au cours de l'étape de balayage 18, ou au cours d'une étape de balayage 18 antérieure, soit une ou plusieurs informations issues d'une étape de décodage 19 antérieure, soit à la fois au moins une telle valeur mesurée et au moins une telle information.

Parmi les paramètres représentatifs de la qualité de l'image acquise par le capteur 3 pouvant être utilisés, on peut choisir notamment la fréquence spatiale maximale fx de l'image du code selon la direction XX' de balayage et/ou l'intensité maximale Imax de l'image du code et/ou l'intensité minimale Imin de l'image du code et/ou le contraste d'au moins une catégorie d'éléments de l'image du code ou des valeurs de contraste des différents éléments de l'image du code. Le contraste d'un code ou d'une catégorie d'éléments d'un code (par exemple toutes les barres de même largeur) peut être représenté par la valeur (Imax-Imin)/(Imax+Imin) obtenue pour toute l'image du code, ou pour une catégorie d'éléments de l'image du code. D'autres formules de contraste peuvent être utilisées.

La valeur optimisée de la hauteur Hy -notamment du pas hy et/ou de la(des) hauteur(s) pyj- peut être calculée et déterminée à partir de la valeur mesurée de l'un au moins de ces paramètres lors de l'étape de lecture 18. Par exemple, dans le cas où l'on sait que les codes 1 à acquérir sont des codes à barres monodimensionnels à une ligne, on peut utiliser une formule prédéterminée. Ainsi, avantageusement et selon l'invention, les moyens électroniques de traitement sont adaptés pour calculer la valeur optimisée du pas hy selon la direction YY' pour un code de type code à barres monodimensionnel à une ligne selon la formule (I) :

$$\text{(I)} \qquad hy = ENT \left[ (1/(py.\tan(\theta max))).[(1/(2.fx) - (Nminx.hx.px)] \right]$$

où

θmax est la déviation angulaire maximale admissible, autour de l'axe optique, des moyens capteurs par rapport au code à acquérir,
px est la dimension des pixels selon la direction XX' de balayage,
fx est la fréquence spatiale maximale d'une image précédemment lue du code selon la direction XX' de balayage,
py est la dimension des pixels selon la direction YY',
Nminx est le nombre minimum de groupes de pixels consécutifs selon la direction XX' de balayage devant être contenus dans l'image d'un élément du code sur le capteur pour permettre son décodage,
ENT est la fonction partie entière,
et avec

$$hx = ENT\ [1/(2fx.Nminx.px)\ ]$$

Cette formule (I) est obtenue par la construction de la figure 3 qui représente dans le plan image une portion du capteur 3 et de deux barres 31, 32 du code séparées de la distance la plus faible (correspondant à la fréquence spatiale maximale du code). Dans ce schéma, on a supposé hx=1, Nminx=2 et hy=8.

De même, dans le cas où l'on sait que les codes 1 à acquérir sont des codes de type PDF 417 (codes à barre pluri-monodimensionnels à plusieurs lignes juxtaposées dans la direction verticale), on peut utiliser une formule prédéterminée. Ainsi, avantageusement et selon l'invention, les moyens électroniques de traitement sont adaptés pour calculer la valeur optimisée du pas hy selon la direction YY' pour un code de type dit PDF 417 selon la formule (II) :

$$(II)\qquad hy=ENT\ \{MIN[(Ky/(2fx.py),\ [(1/py.tan(\theta max))).[1/(2.fx)\ -\ (Nminx.hx.px)]\ ]\}$$

où

θmax est la déviation angulaire maximale, autour de l'axe optique, des moyens capteurs par rapport au code à acquérir,
px est la dimension des pixels selon la direction XX' de balayage,
fx est la fréquence spatiale maximale d'une image précédemment lue du code selon la direction XX' de balayage,
py est la dimension des pixels selon la direction YY',
Nminx est le nombre minimum de pixels consécutifs selon la direction XX' de balayage devant être contenus dans l'image d'un élément du code sur le capteur pour permettre son décodage,
ENT est la fonction partie entière,
Ky est un nombre entier déterminé pour permettre le décodage des codes PDF 417,
MIN est la fonction minimum,
et avec

$$hx = ENT\ [\ 1/(2fx.Nminx.px)\ ].$$

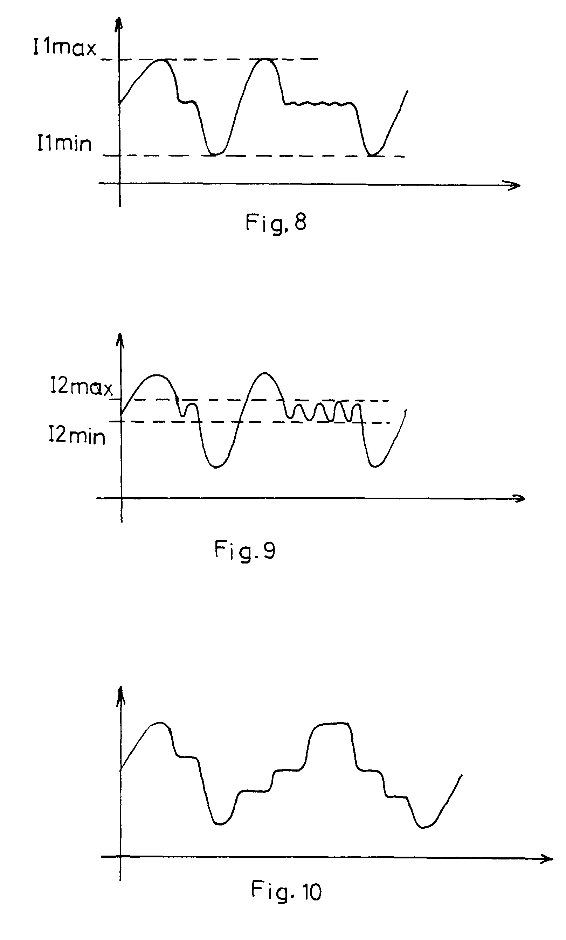

Mais, de façon plus générale, l'invention permet d'optimiser la valeur de Hy sans même connaître a priori le type de code à acquérir. Le type de code peut être recherché lors de l'étape 22 de traitement logique par les moyens 12, 13, 14 électroniques de traitement après la première lecture 18 d'un code à acquérir. Par exemple, lorsque le signal de sortie obtenu présente, comme représenté figure 9c, un nombre de niveaux d'intensité distincts supérieur à 2 avec une fréquence spatiale homogène caractéristique, il est certain que plusieurs éléments différents du code 1 sont couverts par le pas hy selon la direction YY'. En conséquence, le code 1 ne peut pas être formé d'un code à barres monodimensionnel. Il s'agit alors en particulier d'un code de type PDF 417. Or, avec ce type de code, il existe une condition selon laquelle Hy ≤ Ky.mx.1xmin, soit hy ≤ Ky.mx.1xmin/py. Cette condition peut donc être prise en compte pour la détermination de la nouvelle valeur de Hy, notamment de py.

De façon encore plus générale, l'invention permet d'optimiser la valeur de Hy sans même connaître et déterminer le type de code à acquérir.

La figure 8 représente un exemple de signal d'intensité pouvant être obtenu à la sortie 11 du sommateur 10 après un premier balayage 18 d'un code à barres à deux largeurs de barres. Ce signal permet de détecter les barres de grande largeur entre leurs intensités maximales Ilmax et minimales Ilmin, mais atténue les barres de faible largeur. Cette atténuation peut être due soit à une défocalisation de l'image, soit à une valeur de Hy trop grande. Suite à un tel signal, on peut donc diminuer hy, par exemple d'une unité pour réaliser un nouveau balayage. Si après ce nouveau balayage, on constate que le signal n'est pas amélioré, c'est-à-dire qu'on ne détecte pas les barres de faible largeur, le problème provient d'une défocalisation qu'il faut traiter par une autre solution que l'invention. Par contre, si le problème provient de la valeur de Hy, le signal sera amélioré comme représenté figure 9, où les barres de faible largeur apparaissent, avec leur intensité maximale I2max et minimale I2min. On peut, alors, poursuivre cette modification de Hy, tant que le rapport signal/bruit est suffisant, jusqu'à obtenir le décodage.

La figure 10 représente un autre exemple d'information sur le type de code pouvant être obtenue après l'étape de lecture 18. Lorsque le contraste est suffisant, dans le cas d'un code 1 à barres monodimensionnel pouvant présenter deux largeurs de barres différentes, le spectre du signal obtenu est normalement regroupé selon deux valeurs fxl et fx2 de la fréquence spatiale selon la direction XX'. Si l'on constate effectivement la présence de ces deux valeurs, on sait que le code à acquérir est du type à deux largeurs distinctes de barres, et l'on peut alors en déduire une valeur préférentielle pour Hy. Par exemple, on peut alors appliquer la formule (I) mentionnée précédemment pour déterminer hy pour un code à barres monodimensionnel.

On a aussi représenté figure 10 en traits pointillés l'allure du spectre dans le cas où le contraste n'est pas suffisant pour discriminer les deux fréquences fx1 et fx2. Dans ce cas, on peut néanmoins malgré tout considérer que la fréquence spatiale maximale fx de l'image du code selon la direction XX' de balayage présente une valeur médiane fx3 qui peut être utilisée dans le calcul du pas hy.

La figure 5 représente une variante de réalisation du procédé selon l'invention dans laquelle un traitement permettant de déterminer et de modifier la hauteur Hy -notamment le pas hy et/ou la(les) hauteur(s) pyj du(des) rang (s) sélectionné(s)- selon la valeur mesurée d'au moins un paramètre relatif à la qualité de l'image obtenue précédemment, est réalisé indépendamment d'un traitement utilisant au moins une information issue de l'étape de décodage 19. Dans cette variante, le processus de décodage n'est en effet pas exécuté après chaque balayage. Ainsi, cette variante comprend encore une étape d'initialisation 17, une étape de balayage 18 en vue de la lecture d'un code 1 à acquérir, suivie immédiatement d'une étape 24 de mesure d'au moins un paramètre représentatif de la qualité de l'image tel que mentionné ci-dessus. Lors de l'étape 25 subséquente, on examine si des critères relatifs à chacun de ces paramètres sont satisfaits ou non. Autrement dit, on examine si la qualité d'image est satisfaisante ou non pour pouvoir exécuter une étape de décodage. Par exemple, parmi ces critères, on peut requérir que le contraste d'au moins une catégorie d'éléments de l'image du code (par exemple les barres de faible largeur) soit supérieur à une valeur prédéterminée, ou que la fréquence spatiale maximale fx de l'image du code selon la direction XX', soit déterminée avec un écart type maximum prédéterminé. Si ces critères ne sont pas satisfaits, on ne procède pas à l'étape de décodage 19, mais, au contraire, à une étape 22a de traitement logique lors de laquelle on détermine (par calcul ou optimisation) si la valeur de la hauteur Hy doit être modifiée ou non, puis on boucle le procédé en exécutant l'étape 23 de modification et d'enregistrement de cette nouvelle valeur optimisée de Hy, et en retournant à une nouvelle étape de balayage 18. Ainsi, on effectue des étapes de balayage successives et on modifie la valeur Hy tant que la qualité de l'image n'est pas suffisante, au sens des critères prédéterminés lors de l'étape 25.

Lorsque la qualité d'image est jugée suffisante lors de l'étape 25, on procède alors à l'étape 19 de décodage, puis à l'étape 20 lors de laquelle on examine si le décodage a réussi ou non. Si le décodage a réussi, on termine le procédé lors de l'étape 21. Dans le cas contraire, on effectue une étape 22b de traitement logique lors de laquelle on détermine, à partir des informations issues de l'étape de décodage 19, si la valeur de la hauteur Hy doit être modifiée, puis on enregistre, le cas échéant, la nouvelle valeur Hy lors de l'étape 23 de modification, puis on boucle le procédé en réitérant une nouvelle lecture 18.

Pour calculer la valeur optimisée de la hauteur Hy de la partie balayée 16, on peut calculer une valeur optimisée du pas hy (nombre de rangs) et/ou, dans la variante de la figure 12, déterminer la sélection de rang(s) adajacent (s) présentant une hauteur totale la plus proche de la valeur optimale, par exemple en choisissant le rang de hauteur pyj la plus appropriée.

Le procédé selon l'invention peut être implémenté par programmation à partir des fonctions logiques décrites ci-dessus.

L'invention peut faire l'objet de nombreuses variantes de réalisation. En particulier, de très nombreux traitements d'optimisation distincts peuvent être utilisés, selon notamment les types de codes à acquérir. Plus généralement, tous les processus d'optimisation numérique et automatismes d'asservissement numériques ou même analogiques connus sont applicables (régulateur proportionnel, dérivé, intégral, PID, ...).

En outre, au lieu d'une optimisation de Hy, on peut se contenter de mémoriser différentes valeurs prédéterminées de Hy, ou de calculer ces valeurs prédéterminées selon une formule indépendante du code (qui ne dépend que d'un numéro d'ordre de l'étape de balayage à réaliser), puis effectuer tous les différents balayages possibles, chacun avec l'une de ces valeurs. Dans la variante de la figure 12, on peut même effectuer les différents balayages avec chacun des rangs ou avec chaque sélection possible de rang(s). On exécute le protocole de décodage après chaque balayage ou après tous les balayages. Si l'on exécute le protocole de décodage après chaque balayage, on peut continuer les balayages/décodages successifs, au moins jusqu'à ce que le code soit reconnu, en modifiant Hy entre deux balayages consécutifs. Si l'on exécute le protocole de décodage après tous les balayages, on peut trier les résultats obtenus lors des balayages selon leur qualité (par exemple selon le contraste et/ou l'intensité) et commencer le décodage par les meilleurs résultats.

## Revendications

1. Dispositif optoélectronique d'acquisition de codes à barres bichromatiques comprenant :

   - une fenêtre de lecture (7),
   - des moyens (3, 12, 13, 14) capteurs à balayage électronique comprenant un capteur bidimensionnel (3) comportant une pluralité de détecteurs individuels, dits pixels, délivrant des signaux électriques représentatifs de la quantité de lumière qu'ils reçoivent, les moyens (3, 12, 13, 14) capteurs étant adaptés pour réaliser un balayage électronique d'au moins une partie, dite partie balayée, de ce capteur bidimensionnel (3) selon une direction, dite direction XX' de balayage, les pixels du capteur bidimensionnel (3) étant ordonnés en une pluralité de h rangs juxtaposés selon une direction, dite direction YY', perpendiculaire à la direction XX' de balayage, le capteur bidimensionnel (3) s'étendant selon la direction YY' sur une hauteur supérieure à un pixel, la partie balayée ayant une dimension selon la direction YY', dite hauteur Hy, constante lors de chaque balayage, d'un côté à l'autre du capteur bidimensionnel (3) selon la direction XX' de balayage,
   - des moyens (2, 4) optiques adaptés pour assurer la formation, au moins sur la partie balayée du capteur bidimensionnel (3), d'une image d'un code à acquérir situé en regard de la fenêtre de lecture (7),

   caractérisé en ce que, en vue de l'acquisition d'un code placé en regard de la fenêtre de lecture (7), les moyens (3, 12, 13, 14) capteurs sont adaptés pour réaliser au moins deux balayages et pour modifier entre au moins deux balayages consécutifs, la hauteur Hy de la partie balayée du capteur bidimensionnel (3).

2. Dispositif selon la revendication 1, caractérisé en ce que chaque rang est formé de pixels ayant tous la même dimension dans ce rang selon la direction YY', dite hauteur pyj, en ce que la hauteur pyj de pixels d'au moins un rang du capteur bidimensionnel (3) est différente de celle des pixels d'au moins un autre rang du capteur bidimensionnel (3), et en ce que pour modifier la hauteur Hy de la partie balayée, les moyens (3, 12, 13, 14) capteurs sont adaptés pour réaliser au moins un balayage, dit premier balayage, avec au moins un rang de pixels et au moins un autre balayage, dit deuxième balayage, avec au moins un rang ayant une hauteur pyj de pixels différente de celle d'au moins un rang du premier balayage.

3. Dispositif selon la revendication 2, caractérisé en ce que les moyens (3, 12, 13, 14) capteurs sont adaptés pour réaliser au moins un deuxième balayage avec au moins un rang ayant une hauteur pyj de pixels différente de celle de chaque rang d'au moins un premier balayage.

4. Dispositif selon l'une des revendications 1 à 3, caractérisé en ce que pour modifier la hauteur Hy de la partie balayée, les moyens (3, 12, 13, 14) capteurs sont adaptés pour modifier le nombre, dit pas hy, de rangs consécutifs de la partie balayée.

5. Dispositif selon l'une des revendications 1 à 4, comprenant des moyens (12, 13, 14) électroniques de traitement adaptés pour, lors de chaque lecture d'un code à acquérir :

   . commander les balayages du capteur (3) selon la direction de balayage XX', et recevoir les signaux électriques qui sont issus des pixels,
   . exécuter un protocole de décodage prédéterminé en vue d'obtenir la valeur d'informations représentée par le code (1),

   caractérisé en ce que les moyens (3, 12, 13, 14) capteurs sont adaptés pour, après chaque balayage (18), exécuter un traitement d'optimisation de la hauteur Hy pour améliorer les résultats de l'étape de balayage subséquente et réduire le nombre d'étapes de balayage nécessaires au décodage, en ce que lors de ce traitement d'optimisation une valeur optimisée de la hauteur Hy devant être utilisée lors d'un balayage subséquent est déterminée en fonction :

   . d'au moins une valeur précédemment mesurée d'au moins un paramètre représentatif de la qualité de l'image acquise par les moyens capteurs,

. et/ou d'au moins une information issue d'une étape de décodage (19) exécutée précédemment,

et en ce que les moyens (3, 12, 13, 14) capteurs sont adaptés pour enregistrer la valeur optimisée de la hauteur Hy ainsi déterminée à utiliser lors d'un balayage subséquent.

6. Dispositif selon la revendication 5, caractérisé en ce que les moyens (12, 13, 14) électroniques de traitement sont adaptés pour fixer par défaut et enregistrer avant un premier balayage en vue de l'acquisition d'un code et/ou après un dernier balayage en vue de l'acquisition d'un code, une valeur initiale $Hy^\circ$ de la hauteur Hy.

7. Dispositif selon l'une des revendications 5 ou 6, caractérisé en ce que la valeur optimisée de la hauteur Hy est déterminée en fonction d'au moins une valeur précédemment mesurée d'au moins un paramètre représentatif de la qualité de l'image acquise par les moyens capteurs choisi parmi la fréquence spatiale maximale fx de l'image du code selon la direction XX' de balayage, l'intensité maximale d'au moins une catégorie d'éléments de l'image du code, l'intensité minimale d'au moins une catégorie d'éléments de l'image du code, et le contraste d'au moins une catégorie d'éléments de l'image du code.

8. Dispositif selon l'une des revendications 5 à 7, caractérisé en ce que la valeur optimisée de la hauteur Hy est déterminée en fonction d'au moins une information relative au type de code à acquérir issue d'une étape de décodage (19) exécutée précédemment.

9. Dispositif selon l'une des revendications 5 à 8, caractérisé en ce que les moyens (12, 13, 14) électroniques de traitement sont adaptés pour déterminer après chaque balayage une valeur optimisée de la hauteur Hy pour obtenir la meilleure profondeur de champ avec une sensibilité en rotation donnée.

10. Dispositif selon l'une des revendications 5 à 9, caractérisé en ce que chaque valeur précédemment mesurée et/ou chaque information utilisée pour déterminer la(les)dite(s) valeur(s) optimisée(s) a été obtenue et enregistrée lors d'un balayage précédant immédiatement ledit traitement d'optimisation.

11. Dispositif selon l'une des revendications 5 à 10, caractérisé en ce que les moyens (12, 13, 14) électroniques de traitement sont adaptés pour, après chaque balayage :

   - déterminer la valeur mesurée de la fréquence spatiale maximale fx de l'image du code selon la direction XX' de balayage,
   - calculer et enregistrer la valeur optimisée de la hauteur Hy selon la direction YY' à partir d'une fonction affine de l'inverse de la valeur mesurée de la fréquence maximale fx de l'image du code selon la direction XX' de balayage.

12. Dispositif selon l'une des revendications 5 à 11, caractérisé en ce que les moyens (12, 13, 14) électroniques de traitement sont adaptés pour déterminer la valeur optimisée de la hauteur Hy selon des fonctions paramétrées par des valeurs prédéfinies de coefficients paramétriques liés au(x) type(s) de codes à acquérir.

13. Dispositif selon la revendication 12, caractérisé en ce que les moyens (12, 13, 14) électroniques de traitement sont adaptés pour déterminer, après au moins un balayage, le type de code correspondant et la valeur des coefficients paramétriques correspondants.

14. Dispositif selon l'une des revendications 5 à 13, caractérisé en ce que les moyens (12, 13, 14) électroniques de traitement sont adaptés pour calculer la valeur optimisée de la hauteur Hy selon une fonction paramétrée par une valeur prédéfinie de la déviation angulaire maximale θmax admissible du capteur (3) autour de l'axe optique ZZ', par rapport au code à acquérir.

15. Dispositif selon l'une des revendications 5 à 14, caractérisée en ce que les moyens (12, 13, 14) électroniques de traitement sont adaptés pour déterminer et, le cas échéant, modifier la valeur optimisée de la hauteur Hy de façon à optimiser la valeur mesurée du contraste d'au moins une catégorie d'éléments de l'image du code.

16. Dispositif selon l'une des revendications 1 à 15, caractérisé en ce que les moyens (2, 4) optiques comportent un diaphragme (5) dont les dimensions sont de l'ordre des dimensions minimales correspondant à la limite théorique de diffraction en étant toujours supérieures à ces dimensions minimales.

**17.** Dispositif selon la revendication 16, caractérisé en ce que la dimension li du diaphragme (5) selon la direction II' choisie parmi la direction XX' de balayage ou la direction YY', est de l'ordre de mais supérieure à :

$$k.\lambda.f\,(1+mi)/pi.Nmini$$

où

    $\lambda$ est la longueur d'onde des moyens d'éclairage,
    f est la distance focale des moyens optiques,
    mi est le grandissement des moyens optiques selon la direction II',
    pi est la dimension des pixels des moyens capteurs selon la direction II',
    Nmini est le nombre minimum de pixels consécutifs selon la direction II' devant être contenus dans l'image d'un élément du code sur le capteur pour permettre son décodage,
    k est un coefficient de forme du diaphragme (5).

**18.** Dans un dispositif optoélectronique d'acquisition de codes à barres bichromatiques, comprenant :

- une fenêtre de lecture (7),
- des moyens (3, 12, 13, 14) capteurs à balayage électronique selon une direction globale de balayage, dite direction XX' de balayage, comprenant une pluralité de détecteurs d'éclairement individuels, dit pixels, délivrant des signaux électriques représentatifs de la quantité de lumière qu'ils reçoivent, ces moyens (3) capteurs comprenant un capteur (3) bidimensionnel dont les pixels sont ordonnés en une pluralité de h rangs, juxtaposés selon une direction, dite direction YY', perpendiculaire à la direction XX' de balayage, ce capteur (3) bidimensionnel s'étendant perpendiculairement à la direction XX' de balayage sur une hauteur supérieure à un pixel, les moyens (3, 12, 13, 14) capteurs étant adaptés pour réaliser un balayage électronique d'au moins une partie, dite partie balayée, du capteur bidimensionnel (3), ayant une dimension selon la direction YY', dite hauteur Hy, constante lors de chaque balayage d'un côté à l'autre du capteur bidimensionnel (3) selon la direction XX' de balayage,
- des moyens (2) optiques adaptés pour assurer la formation, sur les moyens capteurs, d'une image d'un code à acquérir, située en regard de la fenêtre de lecture (7),

un procédé d'acquisition de codes à barres bichromatiques caractérisé en ce que, en vue de l'acquisition d'un code placé en regard de la fenêtre de lecture (7), on réalise au moins deux balayages et on modifie entre au moins deux balayages consécutifs, la hauteur Hy de la partie balayée du capteur bidimensionnel (3).

**19.** Procédé selon la revendication 18, caractérisé en ce que chaque rang est formé de pixels ayant tous la même dimension dans ce rang selon la direction YY', dite hauteur pyj, en ce que la hauteur pyj de pixels d'au moins un rang du capteur bidimensionnel (3) est différente de celle des pixels d'au moins un autre rang du capteur bidimensionnel (3), et en ce que pour modifier la hauteur Hy de la partie balayée, on réalise au moins un balayage, dit premier balayage, avec au moins un rang de pixels et au moins un autre balayage, dit deuxième balayage, avec au moins un rang ayant une hauteur pyj de pixels différente de celle d'au moins un rang du premier balayage.

**20.** Procédé selon la revendication 19, caractérisé en ce que l'on réalise au moins un deuxième balayage avec au moins un rang ayant une hauteur pyj de pixels différente de celle de chaque rang d'au moins un premier balayage.

**21.** Procédé selon l'une des revendications 18 à 20, caractérisé en ce que pour modifier la hauteur Hy de la partie balayée, on modifie le nombre, dit pas hy, de rangs consécutifs de la partie balayée.

**22.** Procédé selon l'une des revendications 19 à 21, dans lequel, lors de chaque lecture (18) d'un code à acquérir :

  . on commande les balayages des moyens (3) capteurs selon la direction de balayage XX', et on reçoit les signaux électriques qui sont issus des pixels,
  . on exécute un protocole de décodage prédéterminé en vue d'obtenir la valeur d'information représentée par le code,

caractérisé en ce que, après chaque balayage, on exécute un traitement d'optimisation de la hauteur Hy pour améliorer les résultats de l'étape de balayage subséquente et réduire le nombre d'étapes de balayage nécessaires au décodage, en ce que lors de ce traitement d'optimisation une valeur optimisée de la hauteur Hy devant être utilisée lors d'un balayage subséquent est déterminée en fonction :

- d'au moins une valeur précédemment mesurée d'au moins un paramètre représentatif de la qualité de l'image acquise par les moyens (3) capteurs,
- et/ou d'au moins une information issue d'une étape de décodage (19) exécutée précédemment,

et en ce qu'on enregistre la valeur optimisée de la hauteur Hy ainsi déterminée à utiliser lors d'un balayage subséquent.

23. Procédé selon la revendication 22, caractérisé en ce qu'on fixe par défaut et on enregistre avant un premier balayage en vue de l'acquisition d'un code et/ou après un dernier balayage en vue de l'acquisition d'un code, une valeur initiale $Hy^\circ$ de la hauteur Hy.

24. Procédé selon l'une des revendications 22 ou 23, caractérisé en ce que la valeur optimisée de la hauteur Hy est déterminée en fonction d'au moins une valeur précédemment mesurée d'au moins un paramètre représentatif de la qualité de l'image acquise par les moyens (3) capteurs choisi parmi la fréquence spatiale maximale fx de l'image du code selon la direction XX' de balayage, l'intensité maximale d'au moins une catégorie d'éléments de l'image du code, l'intensité minimale d'au moins une catégorie d'éléments de l'image du code, et le contraste d'au moins une catégorie d'éléments de l'image du code.

25. Procédé selon l'une des revendications 22 ou 24, caractérisé en ce que la valeur optimisée de la hauteur Hy est déterminée en fonction d'au moins une information relative au type de code à acquérir issue d'une étape de décodage (19) exécutée précédemment.

26. Procédé selon l'une des revendications 22 à 25, caractérisé en ce qu'on détermine après chaque balayage une valeur optimisée de la hauteur Hy pour obtenir la meilleure profondeur de champ avec une sensibilité en rotation donnée.

27. Procédé selon l'une des revendications 22 à 26, caractérisé en ce que chaque valeur précédemment mesurée et/ou chaque information a été obtenue et enregistrée lors d'un balayage précédant immédiatement le traitement d'optimisation.

28. Procédé selon l'une des revendications 22 à 27, caractérisé en ce que, après chaque balayage :

- on détermine la valeur mesurée de la fréquence spatiale maximale fx de l'image du code selon la direction XX' de balayage,
- on calcule et on enregistre la valeur optimisée de la hauteur Hy selon la direction YY', à partir d'une fonction affine de l'inverse de la valeur mesurée de la fréquence spatiale maximale fx de l'image du code selon la direction XX' de balayage.

29. Procédé selon l'une des revendications 22 à 28, caractérisé en ce qu'on détermine la valeur optimisée de la hauteur Hy selon une fonction paramétrée par des valeurs prédéfinies de coefficients paramétriques liés au type de code (1) à acquérir.

30. Procédé selon la revendication 29, caractérisé en ce qu'on détermine, après le premier balayage en vue de l'acquisition d'un code (1), le type de code correspondant et la valeur des coefficients paramétriques correspondants.

31. Procédé selon l'une des revendications 22 à 30, caractérisé en ce qu'on calcule la valeur optimisée de la hauteur Hy selon des fonctions paramétrées par une valeur prédéfinie de la déviation angulaire maximale θmax admissible, autour de l'axe optique, du capteur (3) par rapport au code (1) à acquérir.

32. Procédé selon l'une des revendications 22 à 31, caractérisé en ce qu'on détermine, et, le cas échéant, on modifie la valeur optimisée de la hauteur Hy de façon à optimiser la valeur mesurée du contraste d'au moins une catégorie d'éléments de l'image du code.

Fig. 1

Fig. 2

Fig. 3

Nmin x.hx.px

$\theta$max

X

X'

Hy = hy.py

3

31

1/2fx

32

Hx°, Hy°  — 17

18

Hy  — 23

19

22

20

21

Fig. 4

Fig. 5

Fig. 6

Fig. 7

I1max

I1min

Fig. 8

I2max

I2min

Fig. 9

Fig. 10

Fig 11

Fig 12

**Office européen des brevets**

**RAPPORT DE RECHERCHE EUROPEENNE**

Numéro de la demande

EP 00 39 0022

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 5 319 182 A (HAMMOND JR CHARLES M ET AL) 7 juin 1994 (1994-06-07)<br>* colonne 5, ligne 28 - colonne 6, ligne 59 *<br>* colonne 10, ligne 48 - colonne 11, ligne 27 *<br>--- | 1,4,5,7, 18,21 | G06K7/10 |
| Y | WO 99 48281 A (CALIFORNIA INST OF TECHN) 23 septembre 1999 (1999-09-23)<br>* page 3, ligne 12 - page 7, ligne 23 *<br>* page 10, ligne 11 - ligne 31 *<br>* figure 1 *<br>--- | 1,4,5,7, 18,21 | |
| A | US 5 354 977 A (ROUSTAEI ALEX) 11 octobre 1994 (1994-10-11)<br>* colonne 9, ligne 52 - ligne 61 *<br>--- | 1,18 | |
| A | US 5 635 699 A (CHERRY CRAIG D ET AL) 3 juin 1997 (1997-06-03)<br>* colonne 3, ligne 22 - colonne 4, ligne 17 *<br>* colonne 6, ligne 39 - colonne 9, ligne 5 *<br>* colonne 14, ligne 17 - colonne 14, ligne 45 *<br>--- | 1,18 | **DOMAINES TECHNIQUES RECHERCHES (Int.Cl.7)**<br><br>G06K<br>H04N |
| A | EP 0 315 515 A (SGS THOMSON MICROELECTRONICS) 10 mai 1989 (1989-05-10)<br>* colonne 5, ligne 40 - colonne 6, ligne 52 *<br>--- | 1,18 | |
| A | US 5 710 417 A (HE DUANFENG ET AL) 20 janvier 1998 (1998-01-20)<br>* colonne 3, ligne 44 - ligne 51 *<br>* colonne 7, ligne 61 - ligne 62 *<br>* revendications 21,22 *<br>----- | 2,19 | |

Le présent rapport a été établi pour toutes les revendications

| Lieu de la recherche | Date d'achèvement de la recherche | Examinateur |
|---|---|---|
| LA HAYE | 27 avril 2001 | Bhalodia, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 00 39 0022

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

27–04–2001

| Document brevet cité au rapport de recherche | | Date de publication | Membre(s) de la famille de brevet(s) | | Date de publication |
|---|---|---|---|---|---|
| US 5319182 | A | 07–06–1994 | CA | 2131465 A | 16–09–1993 |
| | | | DE | 69310900 D | 26–06–1997 |
| | | | DE | 69310900 T | 05–02–1998 |
| | | | EP | 0629315 A | 21–12–1994 |
| | | | EP | 0764916 A | 26–03–1997 |
| | | | JP | 7505976 T | 29–06–1995 |
| | | | WO | 9318555 A | 16–09–1993 |
| WO 9948281 | A | 23–09–1999 | AU | 3096199 A | 11–10–1999 |
| | | | EP | 1086578 A | 28–03–2001 |
| US 5354977 | A | 11–10–1994 | US | 5291009 A | 01–03–1994 |
| | | | US | 5349172 A | 20–09–1994 |
| | | | AT | 187001 T | 15–12–1999 |
| | | | AU | 3778693 A | 13–09–1993 |
| | | | DE | 69327114 D | 30–12–1999 |
| | | | DE | 69327114 T | 13–07–2000 |
| | | | DK | 680641 T | 25–04–2000 |
| | | | EP | 0680641 A | 08–11–1995 |
| | | | JP | 8501644 T | 20–02–1996 |
| | | | PT | 680641 T | 28–04–2000 |
| | | | WO | 9317397 A | 02–09–1993 |
| | | | US | 5786582 A | 28–07–1998 |
| | | | US | 5756981 A | 26–05–1998 |
| | | | US | 5777314 A | 07–07–1998 |
| | | | US | 5532467 A | 02–07–1996 |
| | | | US | RE36528 E | 25–01–2000 |
| US 5635699 | A | 03–06–1997 | US | 5446271 A | 29–08–1995 |
| | | | US | 6142376 A | 07–11–2000 |
| EP 0315515 | A | 10–05–1989 | FR | 2622992 A | 12–05–1989 |
| | | | DE | 3875451 A | 26–11–1992 |
| | | | DE | 3875451 T | 15–04–1993 |
| | | | JP | 1156885 A | 20–06–1989 |
| | | | US | 4916298 A | 10–04–1990 |
| US 5710417 | A | 20–01–1998 | US | 5621203 A | 15–04–1997 |
| | | | US | 5229591 A | 20–07–1993 |
| | | | US | 4933538 A | 12–06–1990 |
| | | | EP | 0690403 A | 03–01–1996 |
| | | | CA | 2134699 A | 18–05–1995 |
| | | | EP | 0653720 A | 17–05–1995 |
| | | | JP | 7200718 A | 04–08–1995 |
| | | | US | 5996895 A | 07–12–1999 |
| | | | US | 5811785 A | 22–09–1998 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 00 39 0022

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

27-04-2001

| Document brevet cité au rapport de recherche | Date de publication | Membre(s) de la famille de brevet(s) | Date de publication |
|---|---|---|---|
| US 5710417 A | | US 5396053 A | 07-03-1995 |
| | | US 5561283 A | 01-10-1996 |
| | | US 5569901 A | 29-10-1996 |
| | | US 5525788 A | 11-06-1996 |
| | | US 5600119 A | 04-02-1997 |
| | | US 5665954 A | 09-09-1997 |
| | | US 5235167 A | 10-08-1993 |
| | | US 5866894 A | 02-02-1999 |
| | | US 5250791 A | 05-10-1993 |
| | | US 5478997 A | 26-12-1995 |
| | | CA 1336620 A | 08-08-1995 |
| | | DE 68928690 D | 09-07-1998 |
| | | DE 68928690 T | 04-02-1999 |
| | | EP 0364676 A | 25-04-1990 |
| | | JP 2768919 B | 25-06-1998 |
| | | JP 8171604 A | 02-07-1996 |
| | | JP 2144786 A | 04-06-1990 |
| | | JP 2612617 B | 21-05-1997 |

EPO FORM P0460

Pour tout renseignement concernant cette annexe : voir Journal Officiel de l'Office européen des brevets, No. 12/82